# EUROPÄISCHE PATENTSCHRIFT

(11) **EP 4 286 094 B1**
(45) Veröffentlichungstag und Bekanntmachung des Hinweises auf die Patenterteilung: **29.04.2026**
(21) Anmeldenummer: 23176917.5
(22) Anmeldetag: 02.06.2023
(51) Int. Cl.: B24B 3/46, G05B 99/00, B23D 63/12, B23D 63/00, B24B 51/00, B24B 49/04, B23D 63/14, G05B 19/402

(54) **VERFAHREN UND BEARBEITUNGSVORRICHTUNG ZUM SCHÄRFBEARBEITEN VON SCHNEIDEN EINES ROTATIVEN SCHNEIDWERKZEUGS**
METHOD AND MACHINING DEVICE FOR SHARPENING THE CUTTING EDGES OF A ROTARY CUTTING TOOL
PROCÉDÉ ET DISPOSITIF D'USINAGE POUR L'AFFÛTAGE DE LAMES D'UN OUTIL DE COUPE ROTATIF

(30) Priorität: 02.06.2022 DE 102022114020
(43) Veröffentlichungstag der Anmeldung: 06.12.2023
(73) Patentinhaber: VOLLMER WERKE Maschinenfabrik GmbH, 88400 Biberach/Riss (DE)
(72) Erfinder: Gruschka, Gerhard, 88400 Biberach (DE); Wagner, Roland, 72393 Burladingen (DE); Wenger, Thomas, 88437 Maselheim (DE)
(74) Vertreter: Thum, Bernhard

(56) Entgegenhaltungen:
- FR-A3- 2 774 614
- US-A- 4 819 515
- US-B1- 6 379 218

## Beschreibung

Die vorliegende Erfindung betrifft ein Verfahren zum Schärfbearbeiten, insbesondere Schleifbearbeiten und/oder Erodierbearbeiten, von Schneiden eines rotativen Schneidwerkzeugs mittels einer Bearbeitungsvorrichtung.

Bei rotativen Schneidwerkzeugen sind die Schneiden entlang eines Umfangs des Schneidwerkzeugs an vorgegebenen, wenn auch nicht immer regelmäßigen Winkellagen angeordnet. Zu derartigen Schneidwerkzeugen gehören beispielsweise Sägeblätter von Kreissägen. Während der Herstellung eines rotativen Schneidwerkzeugs ist es notwendig, dessen Schneiden zu schärfen bzw. deren Kontur zu schleifen. Zusätzlich zu einer Schärfbearbeitung der Schneiden dient die Bearbeitung üblicherweise auch dazu, herstellungsbedingte Toleranzen zu kompensieren. Neben einer Schärfbearbeitung der Schneiden während der Herstellung ist jedoch auch üblich, rotative Schneidwerkzeuge nach Gebrauch und dadurch bedingtem Verschleiß zu warten bzw. zu überarbeiten. So werden die Schneiden erneut geschärft, sodass die Lebensdauer des rotativen Schneidwerkzeugs erhöht werden kann.

Bei rotativen Schneidwerkzeugen können die Schneiden aus einem besonderen Werkstoff wie beispielsweise gehärtetem Stahl, Diamant oder aus diamantbeschichteten Hartmetall ausgebildet sein. Um die verschiedenen Arten der Schneiden zu Schärfen und um vorgegebene Schneidgüten zu erreichen, werden für das Schärfbearbeiten der Schneiden verschiedene Trennverfahren genutzt, wie beispielsweise das Schleifbearbeiten oder auch das Erodierbearbeiten. Bei einer Schleifbearbeitung findet häufig eine Schleifscheibe und bei einer Erodierbearbeitung häufig ein Erodierdraht oder eine Erodierscheibe Anwendung.

Seit geraumer Zeit besteht in der Industrie das Bedürfnis, Bearbeitungsverfahren und insbesondere das Schärfen von Schneiden besonders effizient zu gestalten. Gleichzeitig soll eine hohe Bearbeitungsqualität erreicht werden. Dies betrifft auch das Schärfbearbeiten von Schneiden rotativer Schneidwerkzeuge.

Aus DE 197 52 140 A1 ist ein Verfahren und eine entsprechende Vorrichtung zum Schärfen von Kreissägeblättern bekannt. Für einen Schärfvorgang wird das Kreissägeblatt zunächst drehfest mit einer Spindel verbunden. Anschließend wird mit Hilfe eines Tasters die Position der Schneide bzw. der Winkelabstand zwischen den Schneiden des Kreissägeblatts bestimmt. Für die Schleifbearbeitung sind mehrere sogenannte Arbeitsstationen vorgesehen.

Eine der Arbeitsstationen kann in einer festen Winkelposition bezüglich eines angespannten Kreissägeblatts angeordnet sein, wobei die anderen Arbeitsstationen in ihrer Winkelposition relativ zu dem Kreissägeblatt veränderbar sind. Allerdings sind auch Ausführungen bekannt, bei denen alle Arbeitsstation in ihrer Position veränderbar sind. Die Ausgestaltung mit mehreren Arbeitsstationen soll die Bearbeitungszeit eines Kreissägeblatts reduzieren. Eine zunehmende Maschinenkomplexität geht in der Regel jedoch auch mit höheren Anschaffungskosten sowie höheren Wartungskosten einher. Ferner ist eine komplexe Steuerung notwendig, um die vielen Arbeitsstationen simultan zu steuern.

Aus US 6 379 218 B1 ist das Erfassen der Position einer äußeren Zahnspitze eines Sägeblatts bekannt, wobei dies dazu vorgesehen ist, Sägeblätter unterschiedlicher Dimensionen automatisiert zu bearbeiten.

Aus FR 2 774 614 A3 ist es bekannt, einen Schnittwinkel eines Zahns eines Sägeblatts zu erfassen, indem zwei Punkte der zugehörigen Fläche erfasst werden.

Aus US 4 819 515 A ist es bekannt, die Flanken einer Schneide eines Sägeblatts zu schärfen, wobei dazu die vordere und hintere Flanke der Schneide eingemessen werden.

Es ist Aufgabe der vorliegenden Erfindung, ein Verfahren zum Schärfbearbeiten von Schneiden eines rotativen Schneidwerkzeugs bereitzustellen, das gegenüber dem Stand der Technik eine reduzierte Durchlaufzeit eines zu bearbeitenden rotativen Schneidwerkzeugs ermöglicht. Ferner soll dieses Verfahren ein ausreichend hohes Maß an Bearbeitungsqualität ermöglichen. Außerdem ist es vorteilhaft, wenn das Verfahren den Einsatz einer Bearbeitungsvorrichtung ermöglicht, die einen einfachen Aufbau aufweist.

Die erfindungsgemäße Aufgabe wird durch das Verfahren gemäß Anspruch 1 gelöst. Die erfindungsgemäße Aufgabe wird ferner durch die Bearbeitungsvorrichtung nach Anspruch 12 gelöst. Vorteilhafte Weiterbildungen der Erfindung sind in den abhängigen Ansprüchen beschrieben.

Die Erfindung betrifft ein Verfahren zum Schärfbearbeiten von Schneiden eines rotativen Schneidwerkzeugs mittels einer Bearbeitungsvorrichtung. Die Bearbeitungsvorrichtung umfasst:
- eine um eine Drehachse drehantreibbare Aufspannvorrichtung zum Aufspannen des Schneidwerkzeugs,
- eine Messvorrichtung zum Messen der Winkellagen der Schneiden des Schneidwerkzeugs in Bezug auf die Drehachse, und
- ein Bearbeitungswerkzeug.

Das erfindungsgemäße Verfahren umfasst ferner die folgenden Schritte:
a) Aufspannen des Schneidwerkzeugs mittels der Aufspannvorrichtung,
b) Messen der Winkellage einer zu bearbeitenden Schneide des Schneidwerkzeugs mittels der Messvorrichtung als Istposition der zu bearbeitenden Schneide;
c) Bestimmen einer Abweichung der Istposition von einer Sollposition der zu bearbeitenden Schneide;
e) Korrigieren einer relativen Ausgangsposition des Bearbeitungswerkzeugs relativ zu der zu bearbeitenden Schneide anhand der bestimmten Abweichung in eine korrigierte relative Ausgangsposition durch lineares Verlagern des Bearbeitungswerkzeugs und/oder des Schneidwerkzeugs auf der Bearbeitungsvorrichtung;
f) Schärfbearbeiten, insbesondere Schleifbearbeiten und/oder Erodierbearbeiten, der Schneide mittels des Bearbeitungswerkzeugs ausgehend von der korrigierten relativen Ausgangsposition.

Das erfindungsgemäße Korrigieren ermöglicht es, die bestimmte Abweichung der Istposition von der Sollposition der zu bearbeitenden Schneide zumindest teilweise oder vollständig auszugleichen bzw. zu kompensieren. Besonders vorteilhaft ist dabei die Korrektur durch ein lineares relatives Verlagern zwischen der zu bearbeitenden Schneide und dem Bearbeitungswerkzeug, was einfach, schnell und präzise ausgeführt werden kann. Die zu bewegenden Massen sind dabei gering.

Ferner erleichtert die korrigierte relative Ausgangsposition das folgende Schärfbearbeiten. So muss beispielsweise ein Bearbeitungsprogramm, das während des Schärfbearbeitens abläuft, nicht aufwändig geändert werden. Ein vorgegebener Ablauf des Bearbeitungsprogramms kann unverändert beibehalten werden. Das Bearbeitungsprogramm kann ausgehend von der korrigierten relativen Ausgangsposition, beispielweise ausgehend von einem korrigierten relativen Ausgangspunkt, ausgeführt werden.

Durch das erfindungsgemäße Verfahren kann ermöglicht werden, die Abweichung vollständig zu korrigieren bzw. kompensieren. Die Erfinder haben zusätzlich erkannt, dass bei nur teilweiser Kompensation der Abweichung der verbleibende Winkelfehler, der aus einer rein linearen Relativverlagerung zwischen der zu bearbeitenden Schneide und dem Bearbeitungswerkzeug ohne zusätzlich vorgenommener Veränderung der relativen Winkellage zwischen zu bearbeitender Schneide und Bearbeitungswerkzeug resultieren kann, vernachlässigt werden kann, und zwar zu Gunsten einer schnellen Bearbeitung bei gleichzeitig hinreichend hoher Bearbeitungsqualität. Entweder kann der Winkelfehler durch das Schärfbearbeiten kompensiert werden, oder er hat kaum Einfluss auf die Qualität der bearbeiteten Schneide, da er minimal ist.

Weiterhin haben die Erfinder erkannt, dass die Stellgenauigkeit der Aufspannvorrichtung und die daraus zumindest anteilig resultierende Abweichung, selbst wenn die zu bearbeitende Schneide nach dem Messen in eine Bearbeitungsposition gebracht wird, letztlich nicht die Bearbeitungsgenauigkeit bestimmt. Der Abweichung kann durch das erfindungsgemäße Korrigieren effizient entgegen gewirkt werden.

Gemäß einem Aspekt der Erfindung kann vorgesehen sein, dass das lineare Verlagern in Schritt e) auf das lineare Verlagern des Bearbeitungswerkzeugs beschränkt ist. Dies stellt eine einfache, präzise und schnelle Korrektur dar. Darüber hinaus lässt sich dadurch auch der Maschinenaufbau vereinfachen, denn es ist keine Verlagerung des Werkstücks erforderlich.

Ferner kann so das erfindungsgemäße Korrigieren besonders schnell und einfach erfolgen. Diese Beschränkung auf das lineare Verlagern der Bearbeitungswerkzeugs kann von einem Grenzwert abhängig gemacht werden. Liegt die Abweichung unterhalb eines vorgegebenen Grenzwerts, greift die Beschränkung. Liegt die Abweichung oberhalb des Grenzwerts, ist das Korrigieren nicht auf das lineare Verlagern des Bearbeitungswerkzeugs beschränkt. Als Grenzwert kommt beispielsweise eine zulässige Bearbeitungstoleranz für die zu bearbeitende Schneide in Betracht.

Es kann ferner vorgesehen sein, dass bei dem linearen Verlagern in Schritt e) und/oder in den übrigen Verfahrensschritten kein zusätzliches Kompensieren bzw. Korrigieren der Abweichung vorgesehen ist. So kann das Verfahren insgesamt sehr einfach und bei Ausführung auf der Bearbeitungsvorrichtung schnell durchgeführt werden. Auf ein rotative korrigierende Verlagerung des Bearbeitungswerkzeugs und den damit verbundenen Zeitverlust kann somit verzichtet werden.

Umfasst das Korrigieren in Schritt e) neben dem linearen Verlagern des Bearbeitungswerkzeugs auch ein lineares Verlagern des Schneidwerkzeugs, kann dies zu einer zusätzlichen Zeitersparnis führen. Das jeweilige lineare Verlagern der beiden Komponenten zueinander kann zeitlich parallel erfolgen. Ferner kann dies dazu beitragen, die Abweichung besser zu korrigieren bzw. zu kompensieren. Es kann vorgesehen sein, dass das jeweilige lineare Verlagern in zueinander unterschiedlichen Raumrichtungen erfolgt.

Gemäß einem vorteilhaften Aspekt der Erfindung kann der Schritt des Schärfbearbeitens eine lineare relative Verlagerung zwischen Bearbeitungswerkzeug und zu bearbeitender Schneide in zumindest einer Raumrichtung, bevorzugt zwei Raumrichtungen, besonders bevorzugt drei Raumrichtungen umfassen. Damit ist das Schärfbearbeiten einfach ausführbar und durch die Bearbeitungsvorrichtung einfach steuerbar. Ferner ermöglicht eine lineare Verlagerung eine hohe Bearbeitungsqualität und ist einfacher umzusetzen. Die Verlagerung in den jeweiligen Raumrichtungen kann durch entsprechende Schlittenrichtungen einer Schlittenanordnung des Bearbeitungswerkzeugs bereitgestellt werden. Ferner wird in diesem Fall beispielsweise auf eine rotative relative Verlagerung relativ zur zu bearbeitenden Schneide verzichtet, was das Schärfbearbeiten vereinfacht und gleichzeitig eine hohe Bearbeitungsqualität ermöglicht.

Bevorzugt findet gemäß einem Aspekt der Erfindung die relative Verlagerung während des Schärfbearbeitens in zumindest einer der Raumrichtungen des linearen Verlagerns von Schritt e) statt. Dies ermöglicht es, das Verfahren sowie den Aufbau der Bearbeitungsvorrichtung einfach zu halten.

Gemäß einer Weiterbildung der Erfindung umfasst der Schritt des Schärfbearbeitens ein vorgegebenes Bewegungsmuster des Bearbeitungswerkzeugs relativ zu der zu bearbeitenden Schneide. Ein vorgegebenes Bewegungsmuster ermöglicht einen einfachen und reproduzierbaren Schritt des Schärfbearbeitens. Bevorzugt ist das Bewegungsmuster ein lineares Bewegungsmuster, d. h. eine rein lineare Bewegungsbahn. Somit kann das Schärfbearbeiten an jeder zu bearbeitenden Schneide einfach gehalten werden. Der Begriff "Bewegungsmuster" ist unabhängig von einer möglichen (Dreh-)Bewegung des Bearbeitungswerkzeugs zu verstehen, die notwendig ist, um einen Materialabtrag an der Schneide zu bewirken. Ist das Bearbeitungswerkzeug eine Schleifscheibe, so umfasst das Bewegungsmuster nicht die Drehbewegung der Schleifscheibe um dessen Rotationsachse, sondern vielmehr den Schleifhub, der mit der Schleifscheibe abgefahren wird.

Gemäß einer Ausgestaltung der Erfindung nimmt das auf der Aufspannvorrichtung aufgespannte Schneidwerkzeug während des Schärfbearbeitens einen konstanten Winkel zu der Drehachse ein. Gemäß einer Ausgestaltung der Erfindung weist das Bearbeitungswerkzeug während des Schärfbearbeitens einen konstanten Winkel bezüglich der zu bearbeitenden Schneide bzw. einer zu erzeugenden Kontur der Schneide bzw. einer zu erzeugenden Teilkontur auf. Zwischen zu erzeugenden Teilkonturen kann der Winkel des Bearbeitungswerkzeugs geändert werden.

Gemäß einem vorteilhaften Aspekt der Erfindung kann die Sollposition ein vorgegebener Wert sein. Der vorgegebene Wert kann sich beispielsweise aus vorhandenen Daten zu dem Schneidwerkzeug, wie einem Datenblatt, einem Aufdruck auf dem Schneidwerkzeug oder zugehörigen Herstellerangaben, ergeben. Vorhandene Daten können sich auch aus früheren Messvorgängen desselben Schneidwerkzeugs oder eines vergleichbaren Schneidwerkzeugs ergeben. Ferner kann der vorgegebene Wert eine Bedienereingabe umfassen oder in einer Maschine hinterlegt sein.

Alternativ kann erfindungsgemäß vorgesehen sein, dass die Sollposition die gemessene Winkellage einer vorgegebenen Schneide des Schneidwerkzeugs ist. So ist es möglich, die Winkellagen einiger oder aller Schneiden des Schneidwerkzeugs zu erfassen und eine davon als Sollposition zu definieren. Gemäß einer bevorzugten Ausgestaltung ist die Sollposition die Winkellage einer ersten zu bearbeitenden Schneide. Diese kann mit der Schneide übereinstimmen, die zuerst in Schritt b) gemessen wird. Insgesamt kann dadurch auf einfache Weise eine Sollposition definiert werden. Bei Kreissägeblättern mit Ungleichteilung müssen gegebenenfalls mehrere Messungen durchgeführt werden oder es kommen andere Verfahren zum Bestimmen der Sollposition zum Einsatz.

Gemäß einem Aspekt der Erfindung geht dem Schärfbearbeiten ein Schritt d) des Positionierens der zu bearbeitenden Schneide in einer Bearbeitungsposition mittels Drehantreiben der Aufspannvorrichtung voran. Dies ist insbesondere dann vorteilhaft, wenn das Bearbeitungswerkzeug relativ zu dem Schneidwerkzeug an einer anderen Umfangsposition als die Messvorrichtung angeordnet ist. Dann wird die zu bearbeitende Schneide ausgehend von einer Messposition in eine Bearbeitungsposition gedreht. Das Drehantreiben der Aufspannvorrichtung mit dem Schneidwerkzeug kann zeiteffizient umgesetzt werden.

Gemäß einer Weiterbildung des erfindungsgemäßen Verfahrens kann vorgesehen sein, dass im Schritt d) des Positionierens die Abweichung zumindest teilweise kompensiert wird. Somit kann das Ausmaß reduziert werden, mit dem ein Korrigieren in Schritt e) notwendig ist. Das Kompensieren in Schritt d) erfolgt vorzugsweise dann, wenn die Abweichung oberhalb eines vorgegebenen Grenzwerts liegt. Damit ist es möglich, vergleichsweise große Abweichungen zumindest teilweise durch Drehung der Aufspannvorrichtung zu kompensieren und gleichzeitig ein schnelles Positionieren zu erreichen. Dabei muss die Sollposition der Schneide nicht exakt erreicht werden, da zu jeder Zeit durch das Messsystem der Aufspannvorrichtung und die zuvor durchgeführte Messung der Winkellage der Schneide die Position der Schneide bekannt ist und zur Bearbeitung die Position des Bearbeitungswerkzeugs korrigiert werden kann. Das Korrigieren in Schritt e), beispielsweise durch lineare Stellantriebe, sorgt weiterhin für eine genaue und vor allem schnelle (teilweise) Korrektur der verbleibenden Abweichung. Auf ein aufwändiges Korrigieren der Winkellage des Bearbeitungswerkzeugs kann demzufolge verzichtet werden. Als Grenzwert kommt ein vorgegebener Wert wie eine zulässige Winkeltoleranz der zu bearbeitenden Schneide oder auch ein Wert der Stellgenauigkeit der Aufspannvorrichtung in Bezug auf die Drehachse in Frage.

Gemäß einer weiteren Ausgestaltung des erfindungsgemäßen Verfahrens findet das zumindest teilweise Kompensieren der Abweichung durch Drehantreiben der Aufspannvorrichtung im Zusammenspiel mit dem Korrigieren in Schritt e) statt. In anderen Worten kann das Korrigieren in Schritt e) abhängig von dem Kompensieren in Schritt d) erfolgen oder umgekehrt. So kann das Ausmaß des Korrigierens in Schritt e) geringer ausfallen, wenn in Schritt d) bereits ein Kompensieren stattfindet.

Es kann alternativ vorgesehen sein, dass der Schritt d) vor oder nach Schritt e) ausgeführt wird.

Gemäß einer Weiterbildung der Erfindung kann vorgesehen sein, dass der Schritt b) wiederholt wird, bis die Winkellagen aller zu bearbeitenden Schneiden des Schneidwerkzeugs gemessen sind.

Ferner kann gemäß einem Aspekt der Erfindung vorgesehen sein, dass die Schritte c) bis f) so oft wiederholt werden, bis alle zu bearbeitenden Schneiden des Schneidwerkzeugs schärfbearbeitet sind.

Alternativ können die Schritte b) bis f) so oft wiederholt werden, bis alle zu bearbeitenden Schneiden des Schneidwerkzeugs schärfbearbeitet sind. Dies können tatsächlich alle Schneiden des Schneidwerkzeugs sein oder aber auch nur eine Untermenge davon.

Gemäß einer Weiterbildung der Erfindung kann vorgesehen sein, dass der Schritt b) einen Teilschritt b1) des Ausrichtens der zu bearbeitenden Schneide relativ zu der Messvorrichtung umfasst. Das Messen in Schritt b) erfolgt dann anschließend an das Ausrichten, beispielsweise in einem Teilschritt b2) oder b3).

Gemäß einer Weiterbildung der Erfindung kann vorgesehen sein, dass das Schärfbearbeiten ein Schleifbearbeiten und/oder Erodierbearbeiten umfasst. Insbesondere kann das Schleifbearbeiten mittels einer Schleifscheibe erfolgen. Ferner kann das Erodierbearbeiten mittels eines Erodierdrahts oder einer Erodierscheibe erfolgen. Alternativ sind auch Bearbeitungsverfahren, wie etwa eine Fräsbearbeitung oder eine Laserbearbeitung denkbar.

Durch eine Abwandlung des Verfahrens kann erreicht werden, dass ein Schneidwerkzeug mit gleicher Zahnteilung entsteht. Hierzu wird die Winkellage einer Schneide gemessen und die weiteren Schneiden mit gleicher bzw. vorgegebener Teilung bzw. vorgegebenen Abstand zueinander bearbeitet. Dazu kann vorgesehen sein, dass zumindest der Schritt f) so oft wiederholt wird, bis alle zu bearbeitenden Schneiden schärfbearbeitet sind. Hierbei kann abhängig von den Positionen der unbearbeiteten Scheiden der Abtrag pro Schneide aufgrund des Schärfbearbeitens unterschiedlich ausfallen. Wichtig ist dabei, zu gewährleisten, dass an jeder zu bearbeitenden Schneide ein Materialabtrag stattfindet.

Die Erfindung betrifft ferner eine Bearbeitungsvorrichtung zum Schärfbearbeiten von Schneiden eines rotativen Schneidwerkzeugs, wobei die Bearbeitungsvorrichtung umfasst:
- eine um eine Drehachse drehantreibbare Aufspannvorrichtung zum Aufspannen des Schneidwerkzeugs,
- eine Messvorrichtung zum Messen der Winkellagen der Schneiden des Schneidwerkzeugs in Bezug auf die Drehachse, und
- ein Bearbeitungswerkzeug;
dadurch gekennzeichnet, dass die Bearbeitungsvorrichtung zum Ausführen eines Verfahrens der vorstehend beschriebenen Art eingerichtet ist.

Gemäß einer Weiterbildung kann vorgesehen sein, dass die Messvorrichtung einen taktilen oder berührungslosen Sensor umfasst.

Gemäß einem Aspekt der Erfindung kann die Bearbeitungsvorrichtung eine Schlittenanordnung umfassen, auf der das Bearbeitungswerkzeug angeordnet ist, wobei die Schlittenanordnung eine lineare Verlagerbarkeit des Bearbeitungswerkzeugs in zumindest einer ersten und/oder einer zweiten und/oder einer dritten Schlittenlängsachse bereitstellt, im folgenden Schlittenrichtung genannt. Die Schlittenrichtungen können zueinander orthogonal ausgerichtet sein. So kann das Korrigieren auf einfache Weise mittels der Schlittenanordnung erfolgen.

Gemäß einer Weiterbildung kann vorgesehen sein, dass die Schlittenanordnung zum Verlagern des Bearbeitungswerkzeugs in der ersten Schlittenrichtung einen ersten Direktantrieb und/oder zum Verlagern des Bearbeitungswerkzeugs in der zweiten Schlittenrichtung einen zweiten Direktantrieb und/oder zum Verlagern des Bearbeitungswerkzeugs in der dritten Schlittenrichtung einen dritten Direktantrieb umfasst.

Gemäß einer Weiterbildung der Erfindung kann vorgesehen sein, dass das Schneidwerkzeug ausgebildet rotationssymmetrisch ist und/oder die Schneiden an dem Schneidwerkzeug entsprechend eines vorgegebenen Musters und/oder vorgegebenen Zahnabstands angeordnet sind. Wie bereits erwähnt, ist es auch möglich, Schneidwerkzeugs mit Ungleichteilung zu bearbeiten, also mit entlang des Umfangs ungleichmäßig verteilten Schneiden.

Gemäß einer Ausgestaltung der Erfindung kann vorgesehen sein, dass die Aufspannvorrichtung in zumindest einer, bevorzugt zwei, besonders bevorzugt drei Raumrichtungen linear verlagerbar, beispielsweise auf einer Schlittenanordnung, angeordnet ist.

Allgemein sei angemerkt, dass das Schärfbearbeiten beispielsweise auch ein Konturschleifen umfassen kann. Während eines Konturschleifens kann ein kontinuierliches oder diskontinuierliches Drehantreiben der Aufspannvorrichtung um die Drehachse erfolgen. Bei einem Konturschleifen kann die Bearbeitungsposition unabhängig von einer Winkellage des Schneidwerkzeugs in Bezug auf die Drehachse definiert sein. In diesem Fall kann sie beispielsweise durch eine Position der Drehachse bzw. der Aufspannvorrichtung im Raum bzw. in Bezug auf andere Bestandteile der Bearbeitungsvorrichtung definiert sein.

Auch ist das Schärfbearbeiten nicht auf Bearbeitungsverfahren beschränkt, in denen die Schneide zwingend final geschärft wird. Es kann beispielsweise damit im Zusammenhang stehende oder verwandte Bearbeitungsschritte umfassen. Entscheidend ist, dass Material von der Schneide oder einem Bereich benachbart zu dieser abgetragen wird. Dies kann beispielsweise durch ein Schleifbearbeiten und/oder auch Erodierbearbeiten erfolgen. Ferner kann das Schärfbearbeiten verschiedene Bearbeitungsverfahren des Materialabtrags kombinieren. Auch kann das Schärfbearbeiten ein Herstellen einer Schneide, beispielsweise aus einem Rohling, umfassen, wie es bei einer erstmaligen Bearbeitung zum Bereitstellen eines neuen Schneidwerkzeugs erforderlich ist.

Es sei allgemein angemerkt, dass Merkmale, Ausgestaltungen oder Vorteile der Erfindung, die im Zusammenhang mit dem Verfahren erläutert wurden, auch für die Bearbeitungsvorrichtung zutreffen, mit der das vorstehend beschriebene Verfahren ausgeführt wird. Merkmale des Verfahrens können somit von der Bearbeitungsvorrichtung realisiert und insbesondere in Vorrichtungsmerkmalen verkörpert sein, ohne dass diese Vorrichtungsmerkmale explizit erwähnt sein müssten. Gleiches gilt umgekehrt für Merkmale der Bearbeitungsvorrichtung, die ebenso für das Verfahren gelten.

Die Erfindung wird nachfolgend anhand der beigefügten Zeichnungen weiter erläutert. Es stellen dar:
- Fig. 1: eine schematische Darstellung der erfindungsgemäßen Bearbeitungsvorrichtung; und
- Fig. 2: eine schematische Darstellung des erfindungsgemäßen Verfahrens;

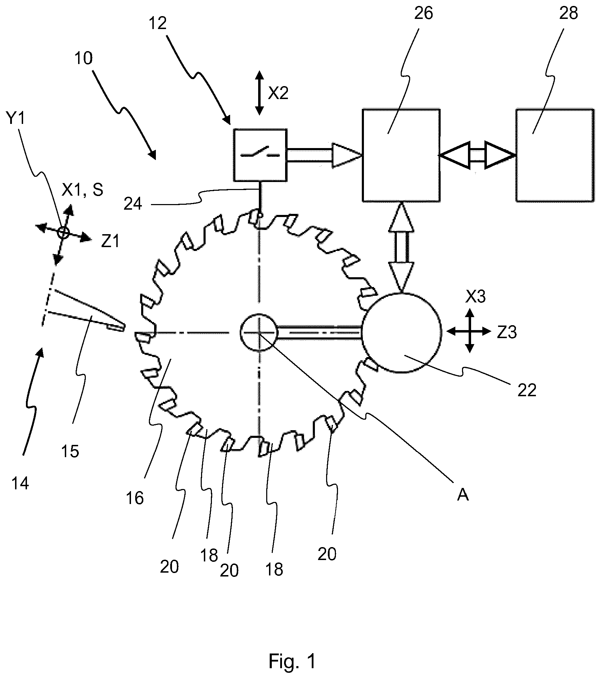

Figur 1 zeigt eine schematische Darstellung einer erfindungsgemäßen Bearbeitungsvorrichtung 10, die eine um eine Drehachse A drehantreibbare, jedoch nicht näher dargestellte Aufspannvorrichtung aufweist. Ferner weist die Bearbeitungsvorrichtung 10 eine Messvorrichtung 12 und eine Bearbeitungseinheit 14 auf.

Die Bearbeitungseinheit 14 weist ein Bearbeitungswerkzeug 15 auf, das an einer nicht näher dargestellten Schlittenanordnung der Bearbeitungseinheit 14 angeordnet ist, wobei die Schlittenanordnung einen ersten Linearschlitten, der eine lineare Verlagerbarkeit des Bearbeitungswerkzeugs 15 entlang einer ersten Schlittenrichtung X1 ermöglicht, sowie einen zweiten Linearschlitten aufweist, der eine lineare Verlagerbarkeit des Bearbeitungswerkzeugs 15 entlang einer zweiten Schlittenrichtung Z1 ermöglicht. Die Schlittenanordnung kann optional auch eine lineare Verlagerbarkeit des Bearbeitungswerkzeugs 15 entlang einer dritten Schlittenrichtung Y1 ermöglichen. Die Bearbeitungseinheit 14 weist ferner eine drehantreibbare Spindel auf, durch die das Bearbeitungswerkzeug 15 auf der Schlittenanordnung um eine Spindelachse S drehantreibbar ist, die vorliegend mit der ersten Schlittenrichtung X1 zusammenfällt. Das Bearbeitungswerkzeug 15 bzw. die erste Schlittenrichtung X1 und die zweite Schlittenrichtung Z1 sind gegenüber einer horizontalen Achse geneigt angeordnet. Dazu weist die Bearbeitungseinheit 14 einen nicht dargestellten Neigungsverstellmechanismus auf. Der Neigungsverstellmechanismus kann die Schlittenanordnung tragen oder umgekehrt. Vorliegend sind die Spindelachse S und die erste Schlittenrichtung X1 nicht orthogonal zu einer horizontalen Achse ausgerichtet, sondern in einem Winkel von etwa 13 Grad. Der Winkel ist lediglich exemplarisch zu verstehen. Der Winkel kann ein vorgegebener Wert sein, zu dem eine Schneide zu schleifen ist.

Auf der Aufspannvorrichtung ist ein Schneidwerkzeug 16 in Form eines Kreissägeblatts angeordnet und fest eingespannt. Das Schneidwerkzeug 16 weist eine Vielzahl an Zähnen 18 mit einem vorgegebenen, konstanten Zahnabstand auf, wobei an jedem Zahn 18 eine zu bearbeitende Schneide 20 fest angeordnet ist. Die Schneiden 20 sind aus einem besonders harten Material wie gehärtetem Stahl, Hartmetall, polykristallinem Diamant (PKD) oder aus diamantbeschichtetem Hartmetall-Werkstoff ausgebildet.

Die Aufspannvorrichtung ist dazu eingerichtet, das Schneidwerkzeug fest einzuspannen oder freizugeben. Dazu kann ein ansteuerbarer Aufspannmechanismus vorgesehen sein. Die Aufspannvorrichtung weist einen Drehantrieb 22 auf, der dazu eingerichtet ist, die Aufspannvorrichtung um die Drehachse A drehanzutreiben. Die Drehachse A verläuft vorliegend orthogonal zur Bildebene. Ferner ist der Drehantrieb 22 dazu eingerichtet, ein Drehung der Aufspannvorrichtung um die Drehachse A zu sperren. In auf der Aufspannvorrichtung aufgespanntem Zustand ist das Schneidwerkzeug 16 relativ zu der Aufspannvorrichtung und auf dieser fest angeordnet. Der Drehantrieb 22 ist dazu eingerichtet, eine Winkelstellung der Aufspannvorrichtung um die Drehachse A zu erfassen oder als kodierten Wert auszugeben. Die Aufspannvorrichtung kann als Aufspanneinheit ausgebildet sei, die zusätzlich eine Aufspannschlittenanordnung umfasst, die eine lineare Verlagerbarkeit des Drehantriebs relativ zu der übrigen Bearbeitungsvorrichtung 10 bzw. der Bearbeitungseinheit 14 in zumindest einer ersten Aufspannschlittenrichtung X3 und/oder zweiten Aufspannschlittenrichtung Z3 ermöglicht. Bevorzugt ist dann zumindest eine der Aufspannschlittenrichtungen orthogonal zu der Drehachse A angeordnet. Der Drehantrieb 22 ist schematisch neben der Drehachse A dargestellt, kann jedoch auch auf der Drehachse A angeordnet sein.

Die Messvorrichtung 12 ist auf einem nicht näher dargestellten Lineartrieb angeordnet, der es ermöglicht, die Messvorrichtung 12 in einer zur Drehachse A orthogonalen Antriebsrichtung X2 relativ zu der Aufspannvorrichtung zu verlagern. Die Messvorrichtung 12 weist einen taktilen, also einen berührungsempfindlichen Sensor 24 auf. Der Sensor 24 ist dazu eingerichtet, mit einer der zu bearbeitenden Schneiden 20 zu kontaktieren. Sobald ein Kontakt festgestellt wird, wird die Winkellage, also die Drehstellung der Aufspannvorrichtung um die Drehachse A, mittels des Drehantriebs 22 gemessen bzw. erfasst und als Istposition der zu bearbeitenden Schneide 20 über eine Steuerung 26 in einem Speicher 28 gespeichert. Dazu ist die Steuerung 26 mit allen steuerbaren oder signalgebenden Komponenten der Bearbeitungsvorrichtung 10, also auch mit der Messvorrichtung 12, dem Drehantrieb 22 und dem Speicher 28 über Signalleitungen wie einem Bussystem verbunden.

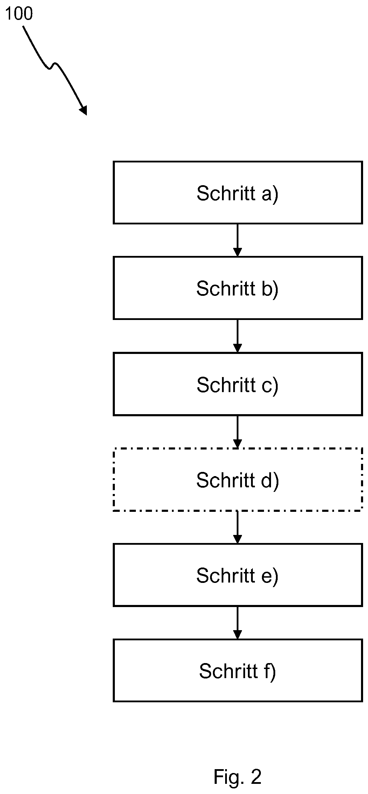

Figur 2 zeigt eine schematische Darstellung des erfindungsgemäßen Verfahrens 100. Das Verfahren 100 umfasst mehrere, aufeinander folgende Schritte a) bis f).

In Schritt a) wird das Schneidwerkzeug 16 auf die Aufspannvorrichtung aufgespannt. Dies kann manuell oder automatisiert erfolgen. An der Aufspannvorrichtung kann eine Markierung vorgesehen sein, die angibt, wie das Schneidwerkzeug 16 aufgespannt werden soll. Zusätzlich oder alternativ kann die Aufspannvorrichtung mit einer Fassung versehen sein, die eine Aufspannung des Schneidwerkzeugs 16 lediglich in einer vorgegebenen Position auf der Aufspannvorrichtung zulässt.

Anschließend erfolgt Schritt b), in dem eine Winkellage einer der zu bearbeitenden Schneiden 20 mittels der Messvorrichtung 12 als Istposition dieser zu bearbeitenden Schneide 20 gemessen wird. Die Winkellage beschreibt dabei einen Messwert bezogen auf die Drehachse A. Die Istposition kann in dem Speicher 28 für die zu bearbeitende Schneide 20 gespeichert werden. Um die Winkellage zu messen, wird die zu bearbeitende Schneide 20 zunächst relativ zu der Messvorrichtung 12 ausgerichtet, beispielsweise in einem Teilschritt b1). Dazu wird die Messvorrichtung 12 in Richtung der Antriebsrichtung X2 verlagert. Ferner wird in einem weiteren Teilschritt b2) die Aufspannvorrichtung um die Drehachse A drehangetrieben. Sobald die Messvorrichtung 12 ein Signal ausgibt, wonach der Sensor 24 die zu bearbeitende Schneide kontaktiert bzw. erkennt, wird die Istposition der zu bearbeitenden Schneide 20 gemessen. Dieses Messen kann auch als Teilschritt b3) benannt sein. Nach einem jeweiligen Messvorgang oder am Ende des Schritts d) kann die Messvorrichtung 12 in der Antriebsrichtung X2 von der zu bearbeitenden Schneide 20 entfernt werden, sodass der Sensor 24 nicht mehr mit der zu bearbeitenden Schneide 20 in Eingriff kommen kann.

Für eine zu bearbeitende Schneide 20 kann das Messen für einen oder mehrere Punkte der Schneide 20 wiederholt werden, um ein Profil oder eine Neigung der Schneide 20 auf dem Schneidwerkzeug 16 zu erfassen. So kann zusätzlich oder stattdessen das Profil oder die Neigung als Istposition gemessen werden.

Der Schritt b) wird vorliegend so oft nacheinander oder durch Durchführen der Schritte b) bis f) wiederholt, bis für alle zu bearbeitenden Schneiden eine Winkellage gemessen wurde bzw. alle zu bearbeitenden Schneiden 20 schärfbearbeitet wurden. Dies bringt insbesondere bei einem Einsatz eines optischen Sensors wie z.B. einer Laserlichtschranke Vorteile. Das Schneidwerkzeug 16 wird dabei einmal um eine Umdrehung gedreht. Alternativ oder zusätzlich kann nach dem Messen einer Schneide an einem Durchmesser diese an zumindest einem weiteren Durchmesser vermessen werden, um z.B. den Spanwinkel der Schneide zu bestimmen.

In Schritt c) wird eine Abweichung der Istposition von einer Sollposition der einen zu bearbeitenden Schneide 20 oder jeweils für alle zu bearbeitenden Schneiden 20 bestimmt. Als Sollposition dient ein vorgegebener Wert, der für das Schneidwerkzeug 16 für jede einzelne der Schneiden 20 bekannt ist oder vorab definiert wurde oder sich aus einer Sollposition einer Schneide für die anderen Schneiden ergibt.

In dem optionalen Schritt d) wird die jeweilige zu bearbeitende Schneide 20 in einer Bearbeitungsposition positioniert. Dazu wird das Schneidwerkzeug 16 so lange um die Drehachse A drehangetrieben, bis die zu bearbeitende Schneide 20, für die die Abweichung bestimmt wurde, eine vorgegebene Drehstellung erreicht. In der Bearbeitungsposition ist es möglich, dass das Bearbeitungswerkzeug 15 mit der zu bearbeitenden Schneide 20 in Eingriff kommt, um eine Schärfbearbeitung zu ermöglichen. In anderen Worten wird die zu bearbeitende Schneide 20 nach dem Messen in die Bearbeitungsposition geschwenkt, sofern das Messen nicht in der Bearbeitungsposition stattfindet. Die Bearbeitungsposition ist ein vorgegebener Drehwinkel, in dessen Verlängerung sich das Bearbeitungswerkzeug 15 befindet. Dabei kommt es nicht darauf an, dass die Schneide 20 exakt die Bearbeitungsposition erreicht, denn vielmehr ist nach dem Positionieren die angefahrene Bearbeitungsposition ausgehend von der gemessenen Istposition bekannt und das Bearbeitungswerkzeug 15 kann durch das Verfahren der Achsen X1 und/oder Z1 in Richtung der angefahrenen Bearbeitungsposition verfahren werden. Dies ist im Vergleich zu bisherigen Maschinen, die beispielsweise einen Vorschub umfassen, ein entscheidender Vorteil. Bei diesen ist die aktuelle Position der Schneide nicht bekannt und es wird angenommen, dass sie sich in der Position befindet, in der sie der Vorschub positioniert hat. Dies kann jedoch aufgrund von Massenträgheit, insbesondere bei zu hoher Vorschubgeschwindigkeit, oder aufgrund von Reibung in der Klemmung oder Deformationen beim Klemmen ungenau sein.

Schritt d) ist deshalb optional, da die Bearbeitungseinheit 14 auch zusammen mit der Messvorrichtung 12 angeordnet sein kann. Dann kann das Bearbeitungswerkzeug 15 anstatt des Sensors 24 mit der zu bearbeitenden Schneide 20 in Eingriff kommen.

Das Drehantreiben in Schritt d) kann von dem Winkel abhängen, mit dem das Bearbeitungswerkzeug 15 geneigt ist.

Liegt die in Schritt c) bestimmte Abweichung oberhalb eines vorgegebenen Grenzwerts, der sich beispielsweise aus der Stellgenauigkeit der Aufspannvorrichtung um die Drehachse A ergibt, wird die Abweichung in Schritt d) durch Vergrößern oder Verringern der Drehbewegung um die Drehachse A zumindest teilweise kompensiert. Das Positionieren kann also angepasst werden. So kann das Ausmaß des Drehantreibens derart erhöht oder verringert werden, dass die Schneide in der Bearbeitungsposition eine Abweichung unterhalb des Grenzwerts erlangt. Das Ausmaß des Korrigierens wird abhängig von Schritt d) ggf. angepasst. So ist es möglich, das erfindungsgemäße Verfahren 100 auch bei großen Abweichungen anzuwenden und trotzdem eine hohe Bearbeitungsgenauigkeit zu erreichen. Die Winkelstellung des Bearbeitungswerkzeugs 15 muss zumindest nicht während der Bearbeitung eines jeweiligen Schneidwerkzeugs 16 geändert werden. Dies verringert den Bearbeitungsaufwand und verkürzt die Durchlaufzeit der Schärfbearbeitung für das gesamte Schneidwerkzeug 16.

In Schritt e) wird die relative Ausgangsposition des Bearbeitungswerkzeugs 15 relativ zu der zu bearbeitenden Schneide 20 anhand der bestimmten Abweichung in eine korrigierte relative Ausgangsposition durch lineares Verlagern korrigiert. Dazu wird das Bearbeitungswerkzeug 15 anhand der Schlittenanordnung linear verlagert. Abhängig von der Abweichung kann das Bearbeitungswerkzeug 15 beispielsweise in der ersten Schlittenrichtung X1 oder auch in der zweiten Schlittenrichtung X2 verlagert werden. Ferner kann das Schneidwerkzeug 16 mittels der Aufspannschlittenanordnung in einer ihrer Schlittenrichtungen verlagert werden, beispielsweise in der ersten Aufspannschlittenrichtung X3 und/oder zweiten Aufspannschlittenrichtung Z3. Dies erfolgt abhängig von der bestimmten Abweichung und ggf. auch abhängig von dem Winkel bzw. der Neigung des Bearbeitungswerkzeugs 15.

In Schritt f) wird die zu bearbeitende Schneide 20 mittels des Bearbeitungswerkzeugs 15 schärfbearbeitet, und zwar ausgehend von der korrigierten Ausgangsposition. Dabei kann ein Schleifbearbeiten oder ein Erodierbearbeiten erfolgen, abhängig von der Ausgestaltung des Bearbeitungswerkzeugs 15. Vorliegend erfolgt das Schleifbearbeiten anhand eines vorgegebenen Bewegungsmusters der Bearbeitungswerkzeugs 15, das durch die Schlittenanordnung der Bearbeitungseinheit 14 erzeugt wird. Ferner wird das Bearbeitungswerkzeug 15 um die Spindelachse S drehangetrieben. Das vorgegebene Bewegungsmuster umfasst zumindest eine Bewegung des Bearbeitungswerkzeugs 15 entlang der zweiten Schlittenrichtung Z1. Zusätzlich kann das Bewegungsmuster auch eine Bewegung des Bearbeitungswerkzeugs 15 in der ersten Schlittenrichtung X1 und/oder einer dritten Schlittenrichtung Y1 umfassen. Die Schlittenrichtungen X1, Z1 und Y1 sind orthogonal zueinander ausgerichtet. Das Bewegungsmuster kann eine Mäanderform, eine Spiralform und/oder eine eindimensionale Bewegungsform umfassen.

Es kann ferner vorgesehen sein, dass der Schritt des Korrigierens die Abweichung nicht vollständig ausgleicht oder ausgleichen kann. Es kann also ein Winkelfehler z.B. in der Spanfläche der zu bearbeitenden Schneide entstehen. Dieser ist allerdings aufgrund des erfindungsgemäßen Verfahrens äußerst gering bzw. kann vernachlässig werden, zu Gunsten eines einfachen und schnellen Verfahrensablaufs.

## Patentansprüche

1. Verfahren (100) zum Bearbeiten, insbesondere Schärfbearbeiten von Schneiden (20) eines rotativen Schneidwerkzeugs (16) mittels einer Bearbeitungsvorrichtung (10), wobei die Bearbeitungsvorrichtung (10) umfasst:
- eine Steuerung (26),
- eine um eine Drehachse (A) drehantreibbare Aufspannvorrichtung zum Aufspannen des Schneidwerkzeugs (16),
- eine Messvorrichtung (12) zum Messen der Winkellagen der Schneiden (20) des Schneidwerkzeugs (16) in Bezug auf die Drehachse (A), und
- ein Bearbeitungswerkzeug (15);
**gekennzeichnet durch** die folgenden Schritte:
a) Aufspannen des Schneidwerkzeugs (16) mittels der Aufspannvorrichtung,
b) Messen der Winkellage einer zu bearbeitenden Schneide (20) des Schneidwerkzeugs (16) mittels der Messvorrichtung (12) als Istposition der zu bearbeitenden Schneide (20);
c) Bestimmen einer Abweichung der Istposition von einer Sollposition der zu bearbeitenden Schneide (20);
e) Korrigieren einer relativen Ausgangsposition des Bearbeitungswerkzeugs (15) relativ zu der zu bearbeitenden Schneide (20) anhand der bestimmten Abweichung in eine korrigierte relative Ausgangsposition durch lineares Verlagern des Bearbeitungswerkzeugs (15) und/oder des Schneidwerkzeugs (16) auf der Bearbeitungsvorrichtung (10);
f) Schärfbearbeiten der zu bearbeitenden Schneide (20) mittels des Bearbeitungswerkzeugs (15) ausgehend von der korrigierten relativen Ausgangsposition.

2. Verfahren (100) nach Anspruch 1, **dadurch gekennzeichnet, dass** das Korrigieren in Schritt e) ein ausschließlich lineares Verlagern des Bearbeitungswerkzeugs (15) umfasst.

3. Verfahren (100) nach Anspruch 1 oder 2, **dadurch gekennzeichnet, dass** der Schritt des Schärfbearbeitens eine lineare relative Verlagerung zwischen Bearbeitungswerkzeug (15) und zu bearbeitender Schneide (20) in zumindest einer Raumrichtung, bevorzugt zwei Raumrichtungen, besonders bevorzugt drei Raumrichtungen umfasst.

4. Verfahren (100) nach einem der vorangehenden Ansprüche, **dadurch gekennzeichnet, dass** der Schritt des Schärfbearbeitens ein vorgegebenes, insbesondere lineares Bewegungsmusters des Bearbeitungswerkzeugs (15) relativ zu der zu bearbeitenden Schneide (20) umfasst.

5. Verfahren (100) nach einem der vorangehenden Ansprüche, **dadurch gekennzeichnet, dass** die Sollposition ein vorgegebener Wert ist.

6. Verfahren (100) nach einem der vorangehenden Ansprüche, **dadurch gekennzeichnet, dass** der Schritt b) wiederholt wird, bis die Winkellagen aller zu bearbeitenden Schneiden (20) des Schneidwerkzeugs (16) gemessen sind.

7. Verfahren (100) nach einem der vorangehenden Ansprüche, **dadurch gekennzeichnet, dass** die Schritte c) bis f) so oft wiederholt werden, bis alle zu bearbeitenden Schneiden (20) des Schneidwerkzeugs (16) schärfbearbeitet sind.

8. Verfahren (100) nach einem der Ansprüche 1 bis 5, **dadurch gekennzeichnet, dass** die Schritte b) bis f) so oft wiederholt werden, bis alle zu bearbeitenden Schneiden (20) des Schneidwerkzeugs (16) schärfbearbeitet sind.

9. Verfahren (100) nach einem der vorangehenden Ansprüche, **dadurch gekennzeichnet, dass** dem Schärfbearbeiten ein Schritt d) des Positionierens der zu bearbeitenden Schneide (20) in einer Bearbeitungsposition mittels Drehantreiben der Aufspannvorrichtung vorangeht, wobei im Schritt d) des Positionierens die Abweichung zumindest teilweise kompensiert wird.

10. Verfahren (100) nach einem der vorangehenden Ansprüche, **dadurch gekennzeichnet, dass** das Schärfbearbeiten ein Schleifbearbeiten und/oder Erodierbearbeiten umfasst.

11. Verfahren (100) nach einem der vorangehenden Ansprüche, **dadurch gekennzeichnet, dass** zumindest der Schritt f), bevorzugt die Schritte e) und f) für zumindest eine, bevorzugt alle weiteren zu bearbeitenden Schneiden (20) wiederholt werden, wobei die weiteren Schneiden (20) unter Berücksichtigung eines vorgegebenen Abstands oder eines vorgegebenen Winkels der Schneiden (20) zueinander schärfbearbeitet werden.

12. Bearbeitungsvorrichtung (10) zum Schärfbearbeiten von Schneiden (20) eines rotativen Schneidwerkzeugs (16), umfassend
- eine um eine Drehachse (A) drehantreibbare Aufspannvorrichtung zum Aufspannen des Schneidwerkzeugs (16),
- eine Messvorrichtung (12) zum Messen der Winkellagen der Schneiden (20) des Schneidwerkzeugs (16) in Bezug auf die Drehachse (A), wobei die Messvorrichtung (12) insbesondere einen taktilen oder berührungslosen Sensor (24) umfasst, und
- ein Bearbeitungswerkzeug (15);
**dadurch gekennzeichnet, dass** die Bearbeitungsvorrichtung (10) mittels einer Steuerung (26) zum Ausführen eines Verfahrens (100) nach einem der Ansprüche 1 bis 11 eingerichtet ist.

13. Bearbeitungsvorrichtung (10) nach Anspruch 12, ferner umfassend eine Schlittenanordnung, auf der das Bearbeitungswerkzeug angeordnet ist, wobei die Schlittenanordnung eine lineare Verlagerbarkeit des Bearbeitungswerkzeugs in zumindest einer ersten und/oder einer zweiten und/oder einer dritten Schlittenlängsachse bereitstellt, wobei optional die Schlittenrichtungen zueinander orthogonal ausgerichtet sein.

14. Bearbeitungsvorrichtung (10) nach einem der Ansprüche 12 oder 13, **dadurch gekennzeichnet, dass** die Schlittenanordnung zum Verlagern des Bearbeitungswerkzeugs in der ersten Schlittenrichtung einen ersten Direktantrieb und/oder zum Verlagern des Bearbeitungswerkzeugs in der zweiten Schlittenrichtung einen zweiten Direktantrieb und/oder zum Verlagern des Bearbeitungswerkzeugs in der dritten Schlittenrichtung einen dritten Direktantrieb umfasst.

15. Bearbeitungsvorrichtung (10) nach einem der Ansprüche 12 bis 14, **dadurch gekennzeichnet, dass** die Aufspannvorrichtung in zumindest einer, bevorzugt zwei, besonders bevorzugt drei Raumrichtungen linear verlagerbar, beispielsweise auf einer Schlittenanordnung, angeordnet ist.

## Claims

1. A method (100) for machining, in particular sharpening, cutting edges (20) of a rotary cutting tool (16), using a machining device (10), the machining device (10) comprising:
- a control device (26),
- a clamping device that can be rotatably driven about an axis of rotation (A) for clamping the cutting tool (16),
- a measuring device (12) for measuring the angular positions of the cutting edges (20) of the cutting tool (16) in relation to the axis of rotation (A), and
- a machining tool (15);
**characterized by** the steps of:
a) Clamping the cutting tool (16) using the clamping device,
b) Measuring the angular position of a cutting edge (20) of the cutting tool (16) to be machined using the measuring device (12) as the actual position of the cutting edge (20) to be machined;
c) Determining a deviation of the actual position from a target position of the cutting edge (20) to be machined;
e) Correcting a relative initial position of the machining tool (15) relative to the cutting edge (20) to be machined based on the determined deviation to a corrected relative initial position through linear displacement of the machining tool (15) and/or the cutting tool (16) on the machining device (10);
f) Sharpening the cutting edge (20) to be machined using the machining tool (15), starting at the corrected relative initial position.

2. The method (100) of claim 1, **characterized in that** correcting in step e) comprises an exclusively linear displacement of the machining tool (15).

3. The method (100) of claim 1 or 2, **characterized in that** the sharpening step comprises a linear relative displacement between the machining tool (15) and the cutting edge (20) to be machined in at least one spatial direction, preferably two spatial directions, particularly preferably three spatial directions.

4. The method (100) of any one of the preceding claims, **characterized in that** the sharpening step comprises a predefined, in particular linear motion pattern of the machining tool (15) relative to the cutting edge (20) to be machined.

5. The method (100) of any one of the preceding claims, **characterized in that** the target position is a predefined value.

6. The method (100) of any one of the preceding claims, **characterized in that** step b) is repeated until the angular positions of all the cutting edges (20) of the cutting tool (16) to be machined have been measured.

7. The method (100) of any one of the preceding claims, **characterized in that** steps c) to f) are repeated until all the cutting edges (20) of the cutting tool (16) to be machined have been sharpened.

8. The method (100) of any one of claims 1 to 5, **characterized in that** steps b) to f) are repeated until all the cutting edges (20) of the cutting tool (16) to be machined have been sharpened.

9. The method (100) of any one of the preceding claims, **characterized in that** sharpening is preceded by a step d) of positioning the cutting edge (20) to be machined in a machining position by driving the clamping device in a rotational manner, wherein the deviation is at least partially compensated for in positioning step d).

10. The method (100) of any one of the preceding claims, **characterized in that** sharpening comprises grinding and/or eroding.

11. The method (100) of any one of the preceding claims, **characterized in that** at least step f), preferably steps e) and f) are repeated for at least one, preferably all further cutting edges (20) to be machined, wherein the further cutting edges (20) are sharpened taking into account a predefined distance or a predefined angle of the cutting edges (20) relative to each other.

12. A machining device (10) for sharpening cutting edges (20) of a rotary cutting tool (16), comprising:
- a clamping device that can be rotatably driven about an axis of rotation (A) for clamping the cutting tool (16),
- a measuring device (12) for measuring the angular positions of the cutting edges (20) of the cutting tool (16) in relation to the axis of rotation (A), the measuring device (12) comprising, in particular, a tactile or non-touch sensor (24), and
- a machining tool (15);
**characterized in that** the machining device (10) is configured to perform a method (100) of any one of claims 1 to 11, using a control device (26).

13. The machining device (10) of claim 12, further comprising a slide assembly on which the machining tool is arranged, the slide assembly enabling linear displacement of the machining tool in at least a first and/or a second and/or a third slide longitudinal axis, wherein the slide directions are optionally orthogonal to each other.

14. The machining device (10) of any one of claims 12 or 13, **characterized in that** the slide assembly comprises a first direct drive for displacing the machining tool in the first slide direction and/or a second direct drive for displacing the machining tool in the second slide direction and/or a third direct drive for displacing the machining tool in the third slide direction.

15. The machining device (10) of any one of claims 12 to 14, **characterized in that** the clamping device is arranged to be linearly displaceable in at least one, preferably two, particularly preferably three spatial directions, e.g. on a slide assembly.

## Revendications

1. Procédé (100) pour usiner, en particulier affûter, des lames (20) d'un outil de coupe rotatif (16) à l'aide d'un dispositif d'usinage (10), le dispositif d'usinage (10) comprenant :
- une commande (26),
- un dispositif de serrage pouvant être entraîné en rotation autour d'un axe de rotation (A) pour serrer l'outil de coupe (16),
- un dispositif de mesure (12) pour mesurer les positions angulaires des lames (20) de l'outil de coupe (16) par rapport à l'axe de rotation (A), et
- un outil d'usinage (15) ;
**caractérisé par** les étapes suivantes de :
a) serrage de l'outil de coupe (16) au moyen du dispositif de serrage,
b) mesure de la position angulaire d'une lame (20) à usiner de l'outil de coupe (16) au moyen du dispositif de mesure (12) en tant que position réelle de la lame (20) à usiner ;
c) détermination d'un écart entre la position réelle et une position de consigne de la lame (20) à usiner ;
e) correction d'une position initiale relative de l'outil d'usinage (15) par rapport à la lame à usiner (20) à l'aide de l'écart déterminé en une position initiale relative corrigée par déplacement linéaire de l'outil d'usinage (15) et/ou de l'outil de coupe (16) sur le dispositif d'usinage (10) ;
f) affûtage de la lame à usiner (20) au moyen de l'outil d'usinage (15) à partir de la position initiale relative corrigée.

2. Procédé (100) selon la revendication 1, **caractérisé en ce que** la correction à l'étape e) comprend un déplacement exclusivement linéaire de l'outil d'usinage (15).

3. Procédé (100) selon la revendication 1 ou 2, **caractérisé en ce que** l'étape d'affûtage comprend un déplacement relatif linéaire entre l'outil d'usinage (15) et la lame (20) à usiner dans au moins une direction spatiale, de préférence deux directions spatiales, de manière particulièrement préférée trois directions spatiales.

4. Procédé (100) selon l'une quelconque des revendications précédentes, **caractérisé en ce que** l'étape d'affûtage comprend un modèle de mouvement prédéfini, en particulier linéaire, de l'outil d'usinage (15) par rapport à la lame (20) à usiner.

5. Procédé (100) selon l'une quelconque des revendications précédentes, **caractérisé en ce que** la position de consigne est une valeur prédéfinie.

6. Procédé (100) selon l'une quelconque des revendications précédentes, **caractérisé en ce que** l'étape b) est répétée jusqu'à ce que les positions angulaires de toutes les lames (20) à usiner de l'outil de coupe (16) soient mesurées.

7. Procédé (100) selon l'une quelconque des revendications précédentes, **caractérisé en ce que** les étapes c) à f) sont répétées jusqu'à ce que toutes les lames (20) à usiner de l'outil de coupe (16) soient affûtées.

8. Procédé (100) selon l'une quelconque des revendications 1 à 5, **caractérisé en ce que** les étapes b) à f) sont répétées jusqu'à ce que toutes les lames (20) à usiner de l'outil de coupe (16) soient affûtées.

9. Procédé (100) selon l'une quelconque des revendications précédentes, **caractérisé en ce que** l'affûtage est précédé d'une étape d) consistant à positionner la lame (20) à usiner dans une position d'usinage au moyen d'un entraînement rotatif du dispositif de serrage, l'écart étant au moins partiellement compensé lors de l'étape d) de positionnement.

10. Procédé (100) selon l'une quelconque des revendications précédentes, **caractérisé en ce que** l'affûtage comprend un meulage et/ou une érosion.

11. Procédé (100) selon l'une quelconque es revendications précédentes, **caractérisé en ce qu'**au moins l'étape f), de préférence les étapes e) et f), sont répétées pour au moins une, de préférence toutes les autres lames (20) à usiner, les autres lames (20) étant affûtées en tenant compte d'une distance prédéfinie ou d'un angle prédéfini des lames (20) entre elles.

12. Dispositif d'usinage (10) pour affûter des lames (20) d'un outil de coupe rotatif (16), comprenant :
- un dispositif de serrage pouvant être entraîné en rotation autour d'un axe de rotation (A) pour serrer l'outil de coupe (16),
- un dispositif de mesure (12) pour mesurer les positions angulaires des lames (20) de l'outil de coupe (16) par rapport à l'axe de rotation (A), le dispositif de mesure (12) comprenant en particulier un capteur tactile ou sans contact (24), et
- un outil d'usinage (15) ;
**caractérisé en ce que** le dispositif d'usinage (10) est configuré, au moyen d'une commande (26), pour exécuter un procédé (100) selon l'une quelconque des revendications 1 à 11.

13. Dispositif d'usinage (10) selon la revendication 12, comprenant en outre un ensemble chariot sur lequel est disposé l'outil d'usinage, l'ensemble chariot permettant un déplacement linéaire de l'outil d'usinage selon au moins un premier et/ou un deuxième et/ou un troisième axe longitudinal de chariot, les directions de chariot étant, en option, orientées orthogonalement les unes par rapport aux autres.

14. Dispositif d'usinage (10) selon l'une quelconque des revendications 12 ou 13, **caractérisé en ce que** l'ensemble chariot comprend un premier entraînement direct pour déplacer l'outil d'usinage dans la première direction de chariot et/ou un deuxième entraînement direct pour déplacer l'outil d'usinage dans la deuxième direction de chariot et/ou un troisième entraînement direct pour déplacer l'outil d'usinage dans la troisième direction de chariot.

15. Dispositif d'usinage (10) selon l'une quelconque des revendications 12 à 14, **caractérisé en ce que** le dispositif de serrage est disposé de manière à pouvoir être déplacé linéairement dans au moins une, de préférence deux, de manière particulièrement préférée trois directions spatiales, par exemple sur un ensemble chariot.
